# EUROPÄISCHE PATENTSCHRIFT

(11) **EP 0 950 863 B1**
(45) Veröffentlichungstag und Bekanntmachung des Hinweises auf die Patenterteilung: **04.06.2003**
(21) Anmeldenummer: 99104379.5
(22) Anmeldetag: 04.03.1999
(51) Int. Cl.: F24C 15/20

(54) **Filtervorrichtung für Dunstabzugshauben**
Mounting device for a filter in an extractor hood
Dispositif avec filtre pour hottes d'aspiration

(30) Priorität: 05.03.1998 DE 19809561
(43) Veröffentlichungstag der Anmeldung: 20.10.1999
(73) Patentinhaber: BSH Bosch und Siemens Hausgeräte GmbH, 81669 München (DE)
(72) Erfinder: Keller, Hans Gert, Dipl.-Ing., 63179 Obertshausen (DE); Meinhardt, Gert, Dipl.-Ing. (FH), 75053 Gondelsheim (DE); Schmid, Dietrich, Dipl.-Ing. (FH), 71139 Ehningen (DE)

(56) Entgegenhaltungen:
- FR-A- 2 112 615
- GB-A- 2 295 333

## Beschreibung

Die Erfindung betrifft eine Filtervorrichtung für Dunstabzugshauben gemäß dem Oberbegriff von Anspruch 1.

Eine solche Filtervorrichtung für Dunstabzugshauben ist aus der DE-B-23 63 820 bekannt. Sie enthält einen Filtereinsalz, welcher aus einem versteiften Blechrahmen besteht, der auf beiden Seiten durch ein Feindrahtgeflecht abgeschlossen ist und mit einem Geruchsfiltermaterial gefüllt ist. Dieser Geruchsfiltereinsatz ist in einer Dunstabzugshaube in Luftströmungsrichtung nach einem Fettfilter angeordnet. Das Geruchsfiltermaterial ist von solcher Art, daß es durch eine Heizvorrichtung soweit aufgeheizt werden kann, daß es seine Geruchsstoffe abgibt und dann erneut aufnahmefähig für Gerüche ist.

Aus der DE-A-27 14 286 ist ein Geruchsfilter mit schrägen Fächerböden bekannt, welch letztere Hohlräume vermeiden sollen, wenn das Geruchsfiltermaterial sich im Laufe der Zeit senkt. Aus der DE-C-31 46 537 ist ein Geruchsfilter bekannt, welcher als Filtermaterial Aktivkohle enthält. Aktivkohle ist nicht regeneriebar und muß deshalb von Zeit zu Zeit ausgewechselt werden. Zur Verlängerung des Luft-Strömungsweges durch das Aktivkohlematerial, wenn es nur eine niedrige Schichtdicke hat, sind in einer Aktivkohleschicht schräg stehende Leitwände angeordnet. Aus dem deutschen Gebrauchsmuster 1 987 333 ist eine Dunstabzugshaube bekannt, welche einen Geruchsfilter und stromaufwärts davon einen Fettfilter enthält. Der Fettfilter ist ein auf eine Rolle aufgewickeltes Band, von welchem nur ein bestimmter Abschnitt als Filter verwendet wird. Bei Verschmutzung dieses Abschnittes wird er aus der Abzugshaube herausgezogen und an einer Abrißkante abgerissen, wobei von der Rolle ein frischer Abschnitt in den Luftströmungsweg gezogen wird. Aus dem deutschen Gebrauchsmuster G 91 05 430.3 ist eine Dunstabzugshaube mit einem Kohle-Geruchsfilter und einem ihm in Luftströmungsrichtung vorgeschalteten Fettfilter bekannt. Der Fettfilter und der Geruchsfilter können je aus mehreren Materialschichten bestehen und über ihren Querschnitt hinweg verschiedene Strömungswiderstände haben.

Die Merkmale des Standes der Technik können auch bei der Erfindung verwendet werden, soweit dies der Erfindungsgedanke nicht ausschließt.

Durch die Erfindung soll die Aufgabe gelöst werden, eine Möglichkeit zu schaffen, durch welche gleiche Geruchsfilterteile für verschiedene Dunstabzugshauben auch dann verwendet werden können, wenn diese unterschiedliche Luft-Fördervolumen haben und deshalb unterschiedliche Mengen an Geruchsfiltermaterial erforderlich ist.

Diese Aufgabe wird gemäß der Erfindung durch die kennzeichnenden Merkmale von Anspruch 1 gelöst.

Durch die Erfindung wird der Vorteil erreicht, daß für verschiedene Dunstabzugshauben, welche verschiedene Luft-Fördervolumen haben, nicht eine entsprechende Anzahl von verschiedenen Geruchsfiltereinheiten benötigt wird, sondern nur eine einzige Filtereinheit oder Kassette, welche einen in Luftströmungsrichtung auf verschiedene Größen einstellbaren Filterraum hat. Die Filtervorrichtung nach der Erfindung benötigt zur Veränderung des Filterraumes keine zusätzlichen Teile.

Weitere Merkmale der Erfindung sind in den Unteransprüchen enthalten. Sie ergeben die Vorteile, daß nur wenige, konstruktiv einfache Bauteile erforderlich sind; und daß die Ränder des Filterraumes luftdicht abgeschlossen sind, so daß an ihnen keine Leckluftströme entstehen können.Cie Erfindung wird im folgenden mit Bezug auf die Zeichnungen anhand einer bevorzugten Ausführungsform als Beispiel beschrieben. In den Zeichnungen zeigen
- Fig.1: einen Querschnitt durch eine zum Füllen ihres Filterraumes auf den Kopf gestellte Filtervorrichtung bei Einstellung auf eine kleinste Filterraumhöhe,
- Fig.2: eine der Fig.1 entsprechende Querschnittsansicht mit erhöhtem Filterraum,
- Fig.3: das linke Ende von Fig.2 in umgedrehter, aufrechter Darstellung auf einem Zwischenboden einer Dunstabzugshaube,
- Fig.4: eine gegenüber den anderen Figuren verkleinerte perspektivische, schematische Darstellung der Geruchsfilter-Kassette nach den Fig.1, 2 und 3.

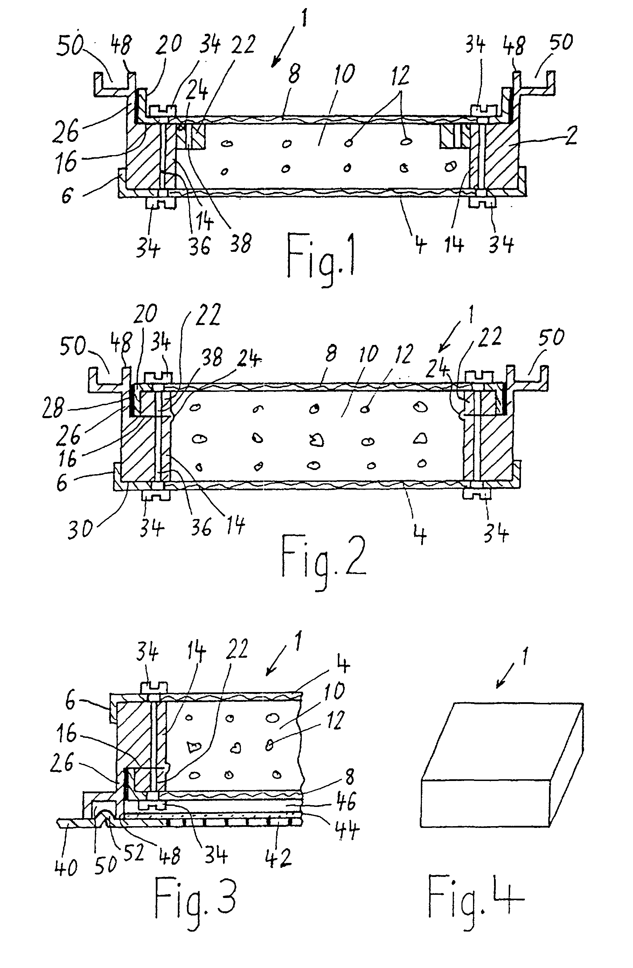

Fig.1 zeigt im Querschnitt eine auf den Kopf gestellte Geruchsfiltereinheit oder Geruchsfilterkassette mit einem aus einem Stück bestehenden, beispielsweise rechteckigen Rahmen 2 auf einer ihn unten abschließenden, jedoch luftdurchlässigen Abdeckung 4. Rahmenartige Randvorsprünge 6 der Abdeckung 4 umgreifen den äußeren Rand des Rahmens 2 und liegen luftdicht am Rahmen 2 an. Eine in Fig.1 mit Abstand oberhalb der unteren Abdeckung 4 angeordnete obere Abdeckung 8 ist ebenfalls luftdurchlässig. Die beiden Abdeckungen 4 und 8 bestehen aus Streckmetall, gelochtem Blech oder einem anderen Gitter. Die beiden Abdeckungen 4 und 8 und der Rahmen 2 begrenzen zusammen einen Filterraum 10, welcher mit Geruchsfiltermasse 12 gefüllt wird, bevor die in Fig.1 oben dargestellte Abdeckung 8 am Rahmen 2 befestigt wird.

Als Geruchsfiltermaterial 12 eignet sich beispielsweise Aktivkohle. Die eine Abdeckung 8, welche in Fig.1 und in Fig.2 oben dargestellt ist, ist in den Innenraum des Rahmens 2 eingepaßt und wahlweise auf verschiedenen Abständen von der anderen Abdeckung 4 positionierbar, um dadurch das Volumen und die Höhe des Filterraumes 10 zu verändern.

Der Rahmen 2 hat auf seiner Innenseite einen Absatz 14, welcher sich um den gesamten Innenumfang des Rahmens 2 erstreckt. Bei einer anderen Ausführungsform können mehrere solcher Absätze 14 um den Innenumfang des Rahmens 2 herum mit Abstand voneinander vorgesehen sein. Der Absatz 14 hat eine zur einen Rahmenstirnseite, in den Fig.1 und 2 nach oben, zeigende Absatzfläche 16, auf welcher die eine Abdeckung 8 liegt. Diese eine Abdeckung 8 hat einen rechtwinkelig aus der Abdeckungsebene abgewinkelten, sich um ihren gesamten Umfang erstreckenden rahmenartigen Randvorsprung 20, welcher bei der in Fig.1 dargestellten Position sich von der Abdeckung 8 nach oben erstreckt, weg von der Absatzfläche 16.

Gemäß Fig.2 können Distanzstücke 22 zwischen die Absatzfläche 16 und die eine Abdeckung 8 positioniert werden, damit diese eine Abdeckung 8 einen größeren Abstand von der anderen Abdeckung 4 erhält und damit der Filterraum 10 in Richtung der durch ihn hindurchströmenden Luft größer wird. Der größere Filterraum 10 von Fig.2 und der kleinere Filterraum 10 von Fig.1 sind jeweils vollständig mit Geruchsfiltermaterial gefüllt, beispielsweise Aktivkohle oder Zeloith oder ein anderes Material, welches Gerüche aus einem durch ihn hindurch strömenden Luftstrom entfernen kann, insbesondere durch Adsorption oder Absorption oder durch andere chemische Umwandlung oder Reaktion. Die Distanzstücke 22 sind bei der bevorzugten Ausführungsform mit dem Rahmen 2 durch eine Gelenkstelle 24 schwenkbar verbunden, so daß sie wahlweise auf die Absatzfläche 16 des Rahmens 2 gemäß Fig.2 oder von der Absatzfläche 16 weg neben den Absatz 14 entsprechend Fig.1 geschwenkt werden können. Der Rahmen 2, die Gelenkstellen 24 und die Distanzstücke 22 bestehen zusammen aus einem einzigen Materialstück, vorzugsweise aus Kunststoff. Die Gelenkstellen 24 sind durch einen in der Dicke reduzierten Teil des Materials des Rahmens 2 gebildet. Diese in der Dicke reduzierte Materialstelle kann anstelle als Gelenk 24 auch als Abreißstelle oder Abschneidstelle verwendet werden, an welcher das Distanzstück 22 vom Rahmen 2 getrennt werden kann. Bei der Produktion wird der Rahmen 2 zusammen mit den Distanzstücken 22 und den Gelenkstellen oder Trennstellen 24 hergestellt, damit er zur Bildung einer Geruchsfiltereinheit mit großem Filterraum 10 gemäß Fig.2 verwendet werden kann. Wenn jedoch diese Filtereinheit für eine Dunstabzugshaube verwendet werden soll, welche eine relativ kleine Luftförderleistung hat, dann können die Distanzstücke 22 entweder von der Absatzfläche 16 in das innere des Rahmens 2 geschwenkt werden entsprechend Fig.1 oder von dem Absatz 14 an der geschwächten Gelenkstelle 24 abgerissen oder abgeschnitten werden, damit die eine Abdeckung 8 entsprechend Fig.1 auf die Absatzfläche 16 gesetzt werden kann, zur Bildung eines niedrigeren Filterraumes.

Die Distanzstücke 22 erstrecken sich auf der Absatzfläche 16 nicht bis zu der in den Fig.1 und 2 sich nach oben erstreckenden Rahmenwand 26, sondern bilden einen Zwischenraum 28, in welchen sich der Randvorsprung 20 nahe der Rahmenwand erstreckt, wenn die eine Abdeckung 8 entsprechend Fig.2 - mit Bezug auf Fig.1 umgekehrt - so angeordnet wird, daß der Randvorsprung 20 von der einen Abdeckung 8 weg in Richtung zur Absatzfläche 16 und damit auch in Richtung zur anderen Abdeckung 4 ragt. Sowohl bei der Position von Fig.1 mit nach oben ragendem Randvorsprung 20 als auch bei der Position von Fig.2 mit nach unten ragendem Randvorsprung 20 wird eine gute gasdichte Abdichtung zwischen dem Außenumfang der einen Abdeckung 8 und dem Rahmen 2 erzielt. Vorzugsweise haben die beiden Abdeckungen 4 und 8 nur in ihren zwischen dem Absatz 14 gelegenen Bereichen Luft-Durchlaßöffnungen, jedoch nicht in ihren darüber hinausreichenden Bereichen. Der Randvorsprung 20 schließt ohne Zwischenraum luftdicht an die Rahmenwand 26 an.

Die Abdeckungen 4 und 8 sind mit Schrauben 34 in dem Absatz 14 angeschraubt und dadurch jederzeit wieder von dem Rahmen 2 trennbar, beispielsweise um den Fitterraum 10 mit frischem Geruchsfiltermaterial 12 zu füllen. Die Schrauben 34 können "selbstschneidende" Schrauben sein, welche sich in dem Vorsprung 14 selbst ein Gewinde schneiden. Zur Positionierung und zum leichteren Schrauben der Schrauben 34 im Rahmen 2 sind in dem Vorsprung 14 und in den Distanzstücken 22 Bohrungen 36 und 38 gebildet. Die Bohrungen 38 der Distanzstücke 22 fluchten mit den Bohrungen 36 des Absatzes 16, wenn die Distanzstücke 22 auf der Absatzfläche 16 sitzen, wie dies Fig.2 zeigt. Durch die Verbindung der Distanzstücke 22 über die Gelenkstelle 24 mit den Absätzen 14 ist die eine Abdeckung 8 durch ihre Schrauben 24 selbst dann mit dem Absatz 14 verbunden, wenn diese Schrauben 34 nicht vollständig durch die Distanzstücke 22 hindurch bis in den Absatz 14 reichen, was durch die Gelenkstelle 24 in Fig.2 erkennbar ist. Bei der Anordnung nach der Fig. 1 sind alle Schrauben 34 direkt in den Absatz 14 geschraubt.

In den Fig.1 und 2 ist die Geruchsfiltereinheit 1 auf den Kopf gestellt dargestellt, damit nach der Befestigung der unteren Abdeckung 4 am Rahmen 2 der Filterraum 10 mit Geruchsfiltermaterial 12 gefüllt und dann die obere Abdeckung 8 nach entsprechender Positionierung der Distanzstücke 22 gemäß Fig.1 oder Fig.2 ebenfalls am Rahmen 2 befestigt werden kann.

Fig.3 zeigt die Geruchsfiltereinheit 1 in umgedrehter, aufgestellter Benutzungsposition in oder an einer Dunstabzugshaube. Von einer solchen Dunstabzugshaube zeigt Fig.3 einen Zwischenboden 40 mit Luft-Durchlassöffnungen 42 und einem zwischen dem Zwischenboden 40 und der einen Abdeckung 8 angeordneten Fettfilter 44 zur Entfernung von Staubpartikeln und Fett aus einem Luftstrom, bevor dieser durch das Geruchsfiltermaterial 12 des Filterraumes 10 strömt. Die Rahmenwand 26 ist über die Höhe der Schrauben 34 hinaus verlängert und begrenzt dadurch zusammen mit dem Zwischenboden 40 einen Raum 46 zur Unterbringung des Fettfilters 44. Die Rahmenwand 26 sitzt mit ihrem Rand 48 auf dem Zwischenboden 40. Der Rand 48 der Rahmenwand 26 zeigt in die gleiche Richtung wie die Absatzfläche 16. Die Rahmenwand 26 ist im Bereich ihres Randes 48 in Form eines Ringbundes radial nach außen erweitert und in der Stirnseite mit einer Nut 50 versehen, welche sich um den gesamten Umfang des Rahmens 2 erstreckt. Im Zwischenboden 40, welcher vorzugsweise aus Blech besteht, ist eine Sicke 52 gebildet, welche sich in die Nut 50 hinein erstreckt. Dadurch bilden der Rand 48, die Nut 50 und die Sicke 52 eine Art Labyrinthdichtung zwischen dem Rahmen 2 und dem Zwischenboden 40. Diese Dichtung vermeidet, daß Luft zwischen dem Rand 48 und dem Zwischenboden 40 von dem Gebläse hindurchgesaugt werden kann, welches in der Dunstabzugshaube den Luftstrom erzeugt, welcher durch den Fettfilter 44 und dann durch das Geruchsfiltermaterial 12 hindurchströmt.

Wie Fig.4 schematisch und perspektivisch in verkleinerter Darstellung zeigt, hat die Geruchsfiltereinheit 10 die Form einer handlichen Einheit oder Kassette, welche an oder in einer Dunstabzugshaube befestigt oder austauschbar angeordnet werden kann.

## Patentansprüche

1. Filtervorrichtung für Dunstabzugshauben, mit einem Rahmen (2), mit luftdurchlässigen Abdeckungen (4,8) auf beiden Rahmenseiten, einem von dem Rahmen (2) und seinen Abdeckungen (4,8) begrenzten Filterraum (10) für eine Geruchsfiltermasse (12), **dadurch gekennzeichnet, daß** eine (8) der Abdeckungen (4,8) in den Innenraum des Rahmens (2) größenmäßig eingepasst ist und wahlweise auf verschiedene Abstände von der anderen Abdeckung (4) positionierbar und am Rahmen (2) befestigbar ist, so daß das Volumen und die Durchströmungslänge des Filterraumes (10) wahlweise veränderbar ist.

2. Filtervorrichtung nach Anspruch 1, **dadurch gekennzeichnet, daß** der Rahmen (2) auf seiner Innenseite mindestens einen nach innen ragenden Absatz (14) mit einer zur einen Rahmenstirnseite zeigenden Absatzfläche (16) aufweist, daß die eine Abdeckung (8) von dieser einen Rahmenstirnseite her in den Rahmen (2) einsetzbar und wahlweise entweder direkt oder unter Zwischenlage von Distanzstücken (22) auf der Absatzfläche (16) positionierbar und am Absatz (14) befestigbar ist, daß die andere Abdeckung (4) auf der anderen Rahmenstirnseite am Rahmen (2) angeordnet und befestigt ist, so daß je nach Weglassung oder Verwendung der Distanzstücke (22) der Abstand der Abdeckungen (4,8) voneinander und damit die Höhe des von ihnen begrenzten Filterraumes kleiner oder größer ist

3. Filtervorrichtung nach Anspruch 2, **dadurch gekennzeichnet, daß** die Abdeckungen (4,8) mit Schrauben (34) an dem Absatz (14) direkt oder über die Distanzstücke (22) an dem Absatz (14) befestigt sind.

4. Filtervorrichtung nach Anspruch 3, **dadurch gekennzeichnet, daß** der Absatz (14) mit Durchgangsbohrungen (36) in Rahmenquerrichtung und die Distanzstücke (22) ebenfalls mit Bohrungen (38) je zur Aufnahme der Schrauben (34) versehen sind.

5. Filtervorrichtung nach Anspruch 4, **dadurch gekennzeichnet, daß** die Bohrungen (36) des Absatzes (14) mit den Bohrungen (38) der Distanzstücke (22) fluchten, wenn die Distanzstücke (22) auf der Absatzfläche (16) des Absatzes (14) positioniert sind.

6. Filtervorrichtung nach einem der Ansprüche 2 bis 5, **dadurch gekennzeichnet, daß** die Distanzstücke (22) mit dem Rahmen (2) schwenkbar oder durch eine Materialstelle mit reduzierter Materialdicke abschneidbar oder abreißbar verbunden sind.

7. Filtervorrichtung nach einem der vorhergehenen Ansprüche, **dadurch gekennzeichnet, daß** die eine Abdeckung (8) mit einem rahmenartigen Randvorsprung (20) versehen ist und wahlweise mit dem Randvorsprung voraus oder in umgekehrter Lage in den Rahmen (2) einsetzbar ist, und daß der Randvorsprung (20) luftdicht abschließend an den Rahmen (2) angepaßt ausgebildet ist.

8. Filtervorrichtung nach Anspruch 7, **dadurch gekennzeichnet, daß**, bei zwischengelegten Distanzstücken (22), der Randvorsprung (20) der einen Abdeckung (8) in Richtung zur Absatzfläche (16) gerichtet ist und in einen Spalt (28) zwischen den Distanzstücken (22) und einer Wand (26) des Rahmens (2) hineinragt.

9. Filtervorrichtung nach einem der Ansprüche 2 bis 8, **dadurch gekennzeichnet, daß** der Rahmen (2) sich in der Richtung, in welche die Absatzfläche (16) zeigt, so weit stirnseitig über die Absatzfläche hinausragt, daß der Rahmen (2) den Umfang eines Raumes (46) zur Aufnahme eines Schmutz- und Fettfilters (44) begrenzt, unabhängig davon, ob die eine Abdeckung (8) direkt oder unter Zischenlegung der Distanzstücke (22) am Rahmen (2) befestigt ist.

10. Filtervorrichtung nach einem der vorhergehenden Ansprüche, **dadurch gekennzeichnet, daß** in einem Rand (48) des Rahmens (2), welcher an ein Element (40) einer Dunstabzugshaube angrenzt, stirnseitig eine Nut (50) gebildet ist, welche zusammen mit dem betreffenden Teil der Dunstabzugshaube eine Dichtung (48,50,52) bildet.

11. Filtervorrichtung nach einem der vorhergehenden Ansprüche, **dadurch gekennzeichnet, daß** der Rahmen (2) ein einstückiges Teil aus Kunststoff ist.

12. Filtervorrichtung nach einem der Ansprüche 2 bis 11, **dadurch gekennzeichnet, daß** der Rahmen (2) einschließlich der Distanzstücke (22) ein einstückiges Teil ist.

## Claims

1. Filter device for vacuum cleaner hoods, comprising a frame (2), air-permeable covers (4, 8) on both frame sides, and a filter chamber (10), which is bounded by the frame (2) and the covers (4, 8) thereof, for a odour filter mass (12), **characterised in that** one (8) of the covers (4, 8) is fitted into the interior space of the frame (2) in terms of size and selectively positionable at different spacings from the other cover (4) and fastenable to the frame (2) so that the volume and the throughflow length of the filter chamber (10) is selectably variable.

2. Filter device according to claim 1, **characterised in that** the frame (2) has on its inner side at least one inwardly projecting step (14) with a step surface (16) facing towards a frame end face, that one cover (8) is insertable from this one frame end face into the frame (2) and positionable on the step surface (16) either directly or with interposition of spacers (22) and fastenable to the step (14), and that the other cover (4) is arranged at and fastened to the frame (2) on the other frame end face, so that depending on omission or use of the spacers (22) the spacing of the covers (4, 8) from one another and thus the height of the filter chamber bounded by them is smaller or greater.

3. Filter device according to claim 2, **characterised in that** the covers (4, 8) are fastened by screws (34) to the step (14) directly or by way of the spacers (22).

4. Filter device according to claim 3, **characterised in that** the step (14) is provided with passage bores (36) in frame transverse direction and the spacers (22) are similarly provided with bores (38) respectively for reception of the screws (34).

5. Filter device according to claim 4, **characterised in that** the bores (36) of the step (14) are aligned with the bores (38) of the spacers (22) when the spacers (22) are positioned on the step surface (16) of the step (14).

6. Filter device according to one of claims 2 to 5, **characterised in that** the spacers (22) are connected with the frame (2) to be pivotable or to be able to be cut or broken off through a material location with reduced material thickness.

7. Filter device according to one of the preceding claims, **characterised in that** the one cover (8) is provided with a frame-like edge projection (20) and is usable selectably with the edge projection foremost or in inverted position in the frame (2) and that the edge projection (20) is formed to be matched to the frame (2) in hermetically sealing manner.

8. Filter device according to claim 7, **characterised in that** in the case of interposed spacers (22) the edge projection (20) of the one cover (8) is directed in direction towards the step surface (16) and protrudes into a gap (28) between the spacers (22) and one wall (26) of the frame (2).

9. Filter device according to one of claims 2 to 8, **characterised in that** the frame (2) projects so far at the end face beyond the step surface in the direction in which the step surface (16) faces that the frame (2) bounds the periphery of a space (46) for reception of a dirt and fat filter (44) independently of whether the one cover (8) is fastened to the frame (2) directly or with interposition of the spacers (22).

10. Filter device according to one of the preceding claims, **characterised in that** a groove (50) is formed at the end face in an edge (48) of the frame (2), which adjoins an element (40) of a vacuum cleaner hood, and forms, together with the relevant part of the vacuum cleaner hood, a seal (48, 50, 52).

11. Filter device according to one of the preceding claims, **characterised in that** the frame (2) is an integral part of synthetic material.

12. Filter device according to one of claims 2 to 11, **characterised in that** the frame (2) inclusive of the spacers (22) is an integral part.

## Revendications

1. Dispositif à filtre pour hottes aspirantes, avec un cadre (2), avec des couvertures (4, 8) des deux côtés du cadre qui laissent passer l'air, un espace de filtrage (10) délimité par le cadre (2) et ses couvertures (4, 8) pour la masse (12) filtrant les odeurs, **caractérisé en ce qu'**une (8) des couvertures (4, 8) est adaptée dans sa taille à l'espace intérieur du cadre (2) et, au choix, peut être positionnée selon différents espacements par rapport à l'autre couverture (4), et peut être fixée sur le cadre (2) de façon à ce que le volume et la longueur de l'écoulement d'air de l'espace de filtrage (10) puissent être modifiés au choix.

2. Dispositif à filtre selon la revendication 1, **caractérisé en ce que** le cadre (2) présente sur son côté interne au moins un épaulement (14) qui dépasse vers l'intérieur, avec une surface d'épaulement (16) tournée vers une face frontale du cadre, **en ce qu'**une couverture (8) peut être mise en place à partir de ladite face frontale du cadre dans le cadre (2) et, au choix, être positionnée, soit directement ou soit avec insertion intermédiaire de pièces de distance (22), sur la surface d'épaulement (16), et peut être fixée sur l'épaulement (14), **en ce que** l'autre couverture (4) est disposée et fixée sur le cadre 2 sur l'autre face frontale de cadre, de façon à ce que lors de non-utilisation ou lors d'utilisation des pièces de distance (22), la distance des couvertures (4, 8) entre elles et ainsi la hauteur de l'espace de filtrage délimitée par elles soit plus petite ou plus grande.

3. Dispositif à filtre selon la revendication 2, **caractérisé en ce que** les couvertures (4, 8) sont fixées directement sur l'épaulement (14) ou à travers les pièces de distance (22) au moyen de vis.

4. Dispositif à filtre selon la revendication 3, **caractérisé en ce que** l'épaulement (14) présente des perforations (36) dans le sens transversal du cadre et les pièces de distance (22) présentent également des perforations (38) pour la réception des vis (34).

5. Dispositif à filtre selon la revendication 4, **caractérisé en ce que** les perforations (36) de l'épaulement (14) sont alignées avec les perforations (38) des pièces de distance (22) lorsque les pièces de distance (22) sont positionnées sur la surface d'épaulement (16) de l'épaulement (14).

6. Dispositif à filtre selon l'une quelconque des revendications 2 à 5, **caractérisé en ce que** les pièces de distance (22) sont reliées de façon pivotante au cadre (2) ou bien peuvent être coupées ou déchirées par un endroit du matériau où l'épaisseur du matériau est réduite.

7. Dispositif à filtre selon l'une quelconque des revendications précédentes, **caractérisé en ce qu'**une couverture (8) est pourvue d'un bord en saillie (20) en forme de cadre, et au choix, peut être mise en place dans le cadre soit avec le bord en avant ou dans le sens inverse, et **en ce que** le bord en saillie (20) est hermétique à l'air sur ses bords et est ajusté au cadre (2).

8. Dispositif à filtre selon la revendication 7, **caractérisé en ce qu'**en présence de pièces de distance (22) insérées en intermédiaire, le bord en saillie (20) d'une couverture (8) est orienté vers la surface d'épaulement (16) et s'engage dans une fente (28) entre les pièces de distance (22) et une paroi (26) du cadre (2).

9. Dispositif à filtre selon l'une quelconque des revendications 2 à 8, **caractérisé en ce que** la face avant du cadre (2) dépasse la surface d'épaulement dans la direction indiquée par la surface d'épaulement (16), de telle façon que le cadre (2) délimite le contour d'un espace (46) pour la réception du filtre de saletés et de graisse (44), indépendamment du fait que la couverture (8) est fixée sur le cadre (2) directement ou bien avec insertion intermédiaire des pièces de distance (22).

10. Dispositif à filtre selon l'une quelconque des revendications précédentes, **caractérisé en ce que** sur la face frontale d'un bord (48) du cadre (2), contigu à un élément (40) d'une hotte aspirante, une rainure (50) est formée qui, avec la partie en question de la hotte aspirante, forme un joint (48, 50, 52).

11. Dispositif à filtre selon l'une quelconque des revendications précédentes, **caractérisé en ce que** le cadre (2) est formé d'une seule pièce en plastique.

12. Dispositif à filtre selon l'une quelconque des revendications 2 à 11, **caractérisé en ce que** le cadre (2) comprend les pièces de distance (22) et est formé d'une seule pièce.
